# EUROPEAN PATENT APPLICATION

(11) **EP 2 782 375 A1**
(43) Date of publication of application: **24.09.2014**
(21) Application number: 13290068.9
(22) Date of filing: 20.03.2013
(51) Int. Cl.: H04W 12/06, B60L 11/18, H02J 7/00

(54) **Smart Power Supply Device and Corresponding Method for Using a Power Supply Device**

(71) Applicant: Eff'Innov Technologies, 14460 Colombelles (FR)
(72) Inventor: Audéon, Francois, 14112 Biéville-Beuville (FR)
(74) Representative: Grünecker, Kinkeldey, Stockmair & Schwanhäusser

(57) **Abstract**

The invention relates to a power supply device (100) for wireless communication with a communication device (200), in particular a wireless contact based or contactless communication device, of a user and for supplying power to an authenticated device (300, 301) based on a result of the wireless communication, wherein the authenticated device (300, 301) is a user's device (300) or an on-demand service device authenticated (301) by the power supply device (100). According to the invention, the power supply device (100) comprises a securing element (101) configured for mutual secure authentication with an external communication device, and in that the user is granted permission to use the authenticated device (300, 301) with the power supplied by the power supply device (100) based on a successful mutual secure authentication between the securing element (101) and the user's communication device (200). The invention further relates to a corresponding method for granting a user access to power supply from a power supply device.

## Description

The invention relates to the field of Radio-Frequency Identification (RFID), more specifically to Near Field Communication (NFC). In particular, it relates to a power supply device capable of identifying a user using an NFC device or the like and providing a service to the user based on the result of the identification. More in particular, the invention relates to a power supply device for wireless communication with a user's communication device and for supplying power to an authenticated device based on a result of the wireless communication. The invention further relates to a corresponding method for granting a user access to power supply from a power supply device.

Power plugs and more in general terminals are known in the art, which use physical or virtual prepaid cards in combination with NFC technology or the like to provide an on-demand service to a customer without requiring any particular user identification.

In case the on-demand service is provided in a custom user way, further power plugs and terminals are also known in the art, which can identify users and consequently grant them authorization to use. For instance, systems are known for renting services such as recharging laptops, cell phones or even electric vehicles at locations equipped with corresponding power plugs or terminals. The identification is commonly performed by means of RFID cards, NFC devices or the like on the user side, and RFID recognition technology complemented by Power Line Communication (PLC) technology or the like on the terminal side. When the user information is recovered, the user is granted permission to use, usually in exchange for a corresponding automated payment, said permission optionally being customizable depending on the user and on the on-demand service to be provided.

Such power plug systems known in the art are commonly installed in public areas such as coffee shops, train stations, airports and the like, to provide easy access power sources to customers while on the go. Such power plugs known in the art usually respond to various needs related to the payment of the on-demand service by the customer. However, the systems know in the art face various problems of security, ergonomics and deployment constraints.

Without any specific protection, the information exchanged wirelessly between the RFID card or other NFC device and the power plug could be monitored by third parties, leading thereby to the possibility of identity and/or authorization theft. Malevolent third parties using RFID jammers could even corrupt, modify or destroy the data stored in the RFID card or other NFC device. In some cases, the original plugs could even be replaced by similar looking plugs comprising devices configured for stealing the user data on the RFID card or NFC device. Thus, the card could be replicated, thereby deceptively granting access to the on-demand service, for instance the use of the power plug as an energy source, to the thief, while making the original user pay for this fraudulent access.

On the power plug or terminal side, an antenna is required for communicating with the RFID card, NFC device or the like. The antenna is commonly arranged either in the plug itself or in the equipment where the plug is accommodated. The latter would be the case for instance in a terminal comprising a power plug for recharging electric vehicles. The arrangement of the antenna can be source of problems for instance when the plug is located at the bottom of a wall or behind some equipment like self-service equipments fixed to a wall.

A further issue is that the customer cannot view the status of his permission to use the on-demand service, in this case the permission to use the power plug as an energy source, without a functional connection to a computer server. However, problems arise in case the customer is using a device such as a cell phone out of battery as the NFC device and/or the server is temporarily inaccessible.

Furthermore, such systems are commonly used for specific uses only, such as recharging an electric vehicle.

In addition, the communication between the power plug or terminal and the server is commonly carried out using PLC technology. Therefore, given all the filters and insulations of the electric network, the communication is no longer possible as soon as the plug and the server are moved to two different electric lines, causing further inconveniences to the users.

The above mentioned problems are solved by a power supply device according to claim 1 for wireless communication with a communication device, in particular a wireless contact based or contactless communication device, of a user and for supplying power to an authenticated device based on a result of the wireless communication, wherein the authenticated device is a user's device or a service device authenticated by the power supply device.

According to the invention, the power supply device comprises a securing element configured for mutual secure authentication with an external communication device, and the user is granted permission to use the authenticated device with the power supplied by the power supply device based on a successful mutual secure authentication between the securing element and the user's communication device. The integration of the securing element has the advantage that the communication between the user's communication device and the inventive power supply device is encrypted and therefore secure in comparison to power plugs know in the art. Identity theft by third parties can thus be prevented and the user's data is secured. Therefore, an advantage of the mutual secure authentication is that the security and trust are increased in comparison to existing systems that are based on user identification only. The invention can be used with on-demand service devices powered by the inventive power supply device, such as washing machines in a laundry or terminals for renting and/or recharging electric vehicles. This invention is also adapted to supplying power on-demand to users needing to recharge electric devices such as cell phones, Personal Digital Assistants (PDA), laptops or the like.

In a preferred embodiment of the invention, the power supply device can advantageously be configured for communication with a user's Radio-Frequency Identification (RFID) device, in particular a Near Field Communication (NFC) device, and/or a Wi-Fi device and/or a Bluetooth device and/or a magnetic device and/or a device with an integrated circuit card (ICC). The invention can thus be advantageous in a wide range of applications using various wireless communication technologies, whether contact based or contactless. In particular, the present invention can be adapted not only for allowing access to the power supply device using user wireless and contactless communication devices using for instance NFC or the like, but it can also advantageously be adapted to low or mid cost user communication devices such as smart phones, laptops or tablets, which are not always equipped with such still rather expensive technologies.

In an advantageous variant of an embodiment of the inventive power supply device, the user can be granted permission to plug a user's authenticated device to the power supply device based on the successful mutual secure authentication. Therefore, the invention finds numerous applications for supplying power to users in public areas such as airports, train stations, coffee shops and the like, where they can plug any electric equipment to the inventive power supply devices for charging, recharging and using. For instance, this is advantageous for travelers needing to recharge cell phone, Personal Digital Assistant (PDA), laptop batteries or the like. Advantageous applications could be found for instance in female wall plugs protected and to which access to plug a user's device would be granted based on a successful secure authentication.

In further preferred embodiments of the inventive power supply device, the securing element can be a Security Access Module (SAM) card and/or a Subscriber Identity Module (SIM) card and/or a Universal Integrated Circuit Card (UICC). It is thus possible to adapt the encryption level and technology to a wide user community and various wireless communication technologies.

Preferably, the inventive power supply device can further comprise user data storage means configured for storing user data read from the user's communication device, in particular for storing user data comprising authentication data, more in particular authentication data for using said authenticated device. One advantage of this feature is that the inventive power supply device can authenticate the authorized users without requiring any external authentication data server, which increases the security level compared to existing systems known in the art. For instance, this reduces the risk of attacks by interfering third parties or "man-in-the-middle" types of attacks in comparison to existing systems. Furthermore, this has the advantage over existing systems known in the art that the flexibility of the entire system is increased, as the power supply device can authenticate users and deliver the on-demand service even if the connection or communication link to an external server is lost.

In a preferred variant, the user data storage means can be a non-volatile memory, in particular comprised in the securing element. In an even further preferred variant, the user data storage means can be configured for encrypting the user data. Thus, even if the inventive power supply device is dismounted from its location and stolen, identity theft can be prevented because the data stored on the data storage means is encrypted. More in general, encrypting the data has the advantage of increasing the security of the inventive power supply device in comparison to the prior art and to reduce the risks of personal user data such as authentication parameters being stolen.

Advantageously, the power supply device can further comprise power consumption measurement means configured for measuring the power consumption of an authenticated device when said authenticated device is used with the power supply device after a successful mutual secure authentication. In a preferred variant of an embodiment, the inventive power supply device can further comprise invoice generating means configured for generating an invoice to be charged to the user based on the power consumption measurement of the power consumption measurement device. In a further preferred variant, the invoice generating means can be further configured for generating the invoice without any restriction of the power supplied to the authenticated device within the power supplying limits of the power supply device. The invention can thus be used advantageously to provide diagnostics about the use of the authenticated devices, and also directly invoice the user by means of the encrypted wireless communication, ensuring the safety of the data exchanged at any time and allowing the invoicing on a "pay-per-use" basis.

Advantageously, the power supply device can further comprise power consumption evolution analyzing means configured for analyzing the evolution of the power consumption of the authenticated device. In a preferred variant of an embodiment, the power consumption evolution analyzing device can be further configured for deducing a usage mode of the authenticated device based on the analysis of the power consumption evolution. It is thus possible to use the inventive power supply device not only for diagnostic purposes, but also to adapt its power supply to various different types of authenticated devices. An advantage of these features is to allow adapting the power current to the instantaneous demand of the authenticated device. This is particularly useful for a fine control of the electric network in smart-grid applications.

In a preferred embodiment, the power supply device can further comprise means for establishing or interrupting the power supply, in particular a relay. More than just a power plug, the inventive power supply device can thereby perform smart decisions on whether a user is granted access to the power supply, or whether the permission should be interrupted. This allows the inventive power supply device to cease delivering power for example when the consumption exceeds a predetermined threshold or when a user's power credit has expired. Similar techniques could also be used for adapting the maximum current delivered by the inventive power supply device depending on the user's credentials.

Advantageously, the power supply device can further comprise a communication device for sending/receiving data to/from the authenticated device, in particular by means of Power Line Communication (PLC). Such variants are advantageous in particular in combination with on-demand service authenticated devices which are plugged to or which comprise a power supply device according to the invention. The communication, including diagnostic and power consumption analysis, between the power supply device and the authenticated device would then be facilitated as no further wiring would be required than the existing electric power cable connection. This allows advantageously extending the functionality of the inventive system, for example by providing remote control of the authenticated device over the inventive power supply device. In alternative variants of preferred embodiments of the invention, other technologies could be used, such as Wi-Fi or Bluetooth or other home or industrial automation technologies like ZigBee or Industrial, Scientific and Medical (ISM) bands radio communication.

In an advantageous variant of an embodiment of the invention, the inventive power supply device can further comprise a user interface device comprising a wireless communication emitter/receiver, in particular a Near Field Communication (NFC) emitter/receiver. In a preferred variant, the user interface device can further comprise an antenna associated to the wireless communication emitter/receiver. Placing the emitter/receiver in the user interface device has the advantage over existing systems that the flexibility of the power supply device is increased, allowing numerous variants of possible embodiments and therefore applications of the invention. In embodiments where the inventive power supply device is a power plug such as a wall plug arranged in locations difficult to access to a user, a remote user interface device can be advantageous when installed at a location easier or more practical to access for the user. Furthermore, a remote user interface device comprising the emitter/receiver can be also advantageous for security reasons. For example when the user interface is arranged close to a wet area, it is advantageous that the user interface device and the power supply device are arranged away from each other.

In a variant of a preferred embodiment, the user interface device can be remote and can further comprise a communication device configured for wired or wireless encrypted communication with the power supply device. This variant is preferred in combination with the user interface device so that the security of the data exchanged between the power supply device and the user's communication device is always ensured.

Advantageously, the user interface device can further comprise a display device configured for displaying at least the power still available in the power supply device for the authenticated device currently in use. The display device can be for example a Liquid Crystal Display (LCD) and/or a Light-Emitting Diode (LED) bar. This variant is advantageous in embodiments where the user requires checking the status of his permission to use the power supply device. Furthermore, this has the advantage that a user can be informed of when his/her power credit should be recharged before an authenticated device, for instance the user's laptop, runs out of power. This is also particularly useful in a prepaid scenario in order to monitor how much power is still available before having to possibly purchase a new prepaid card. A display device can also be used advantageously in order to inform a user of the system status, including potential defaults, failures or even display promotional information, for instance in a scenario where energy access cards would be provided as a promotional material.

Advantageously, the user interface device can further comprise a warning device, in particular an audible warning device. Thus, the inventive power supply device can have the advantage that warning signals could be sent to the intention of the user for instance to inform whether the secure authentication was successful. Warning signals could also be emitted for low power availability or low credit on prepaid systems, and the like. This feature is useful, as users may not always be concentrated on the user interface device, in particular its display device, when using the inventive power supply device. A further advantage, in particular when the warning device is an audible signal, is to allow usage by blind people, for instance in an embodiment in which the user interface device would comprise a series of warning devices to be used as the main user interface device.

In a variant of an embodiment of the invention, the inventive power supply device can be a female power plug, in particular a mounting socket or a wall socket. In a further variant of an embodiment of the invention, the inventive power supply device can be a male power plug, in particular an integrated socket. Thus, the invention finds advantageous applications in all situations in which power supply could be needed, whether a user wants to switch on an on-demand service device already installed and comprising an inventive male plug plugged in turn into a common wall socket, or whether a user wants to use a device of his choice that needs to be plugged to a inventive female wall plug, for instance for recharging a laptop battery or the like. Such embodiment variants of the inventive power supply device find advantages in that they could be used as one-to-one replacement of pre-existing standard wall sockets, thereby optimizing the installation cost and impact with respect to power supply devices known in the art, as, for instance, no additional wall drilling would be necessary.

Furthermore, the above mentioned problems are also solved by a power supply network according to claim 17. The inventive power supply network comprises a plurality of inventive power supply devices, a link device, and a computer server, wherein the link device is arranged on the same electric line as at least one, and up to all, of the plurality of power supply devices and is connected thereto in particular by Power Line Communication (PLC), and the link device is further connected by wired or wireless network to the computer server; and wherein the computer server is configured for configuring a list of users authorized to use any of the plurality of power supply devices and/or forcing a state of any of the plurality of power supply devices and/or monitoring the use of any of the plurality of power supply devices and/or monitoring, in particular monitoring and analyzing, the evolution of the power consumption of at least one authenticated device connected to any of the plurality of power supply devices, in particular receiving and analyzing data received from respective power consumption evolution analyzing devices. A plurality of inventive power supply device can thus be used at various locations in order to supply power in various forms to a wide user community. The invention can be used advantageously with a combination of PLC technology and wired or wireless network technology in order to keep the wiring reduced and be able to exchange data with a central administrator server without suffering unexpected interruptions in the communication when a plug is not on the same electric line as the computer server. In an alternative, the PLC technology could be replaced by communication over Wi-Fi or over a Global System for Mobile (GSM) communications or Global Packet Radio Services (GPRS) link.

In a preferred variant, the inventive power supply network can comprise a plurality of link devices, and each link device can be connected to a plurality of power supply devices. Therefore, the invention has the advantage that the on-demand service can be provided in a secured manner to a wide user community. In variants with a PLC connection between the link devices and the power supply device on one side, and network connections between the links and the computer server on the other, communication problems can be reduced with respect to what is known in the art. Furthermore, having a plurality of link devices can advantageously allow controlling multiple power lines without being limited by the technical limitations of standard single power line PLC technology.

The above problems are also solved by a method for granting a user access to power supply from a power supply device according to claim 19, the inventive method comprising the steps of: communicating wirelessly with a user's communication device; and supplying power based on a result of the wireless communication. According to the invention, the step of communicating wirelessly comprises encrypting the wireless communication and performing a mutual secure authentication with the user's communication device; and the step of supplying power is carried out if the step of performing the mutual secure authentication is successful. The inventive method allows advantageously supplying power to a user identified wirelessly in a secure manner. Identity theft and fraudulent use of the user's data are thereby prevented when compared to methods known in the art.

In preferred and advantageous variants of an embodiment, the inventive method can further comprise at least one of the steps: storing user data, in particular encrypted user data, on the power supply device; measuring, in particular measuring and monitoring, the power consumption during the step of supplying power and/or analyzing the evolution of the power consumption during the step of supplying power; interrupting the step of supplying power if the wireless communication is interrupted and/or warning the user prior to interrupting the power supply; and configuring, in particular remotely configuring, a list of users authorized to use the power supply device. Variants of the inventive method can therefore allow establishing diagnostics and advantageous usage settings for inventive power supply device and corresponding authenticated devices.

The invention will be explained more in detail in the following, based on advantageous embodiments described in combination with the following figures, wherein:
- Figure 1: is a schematic illustration of a power supply device according to an exemplary embodiment of the invention;
- Figure 2: is a schematic illustration of a user interface device for a power supply device according to a further exemplary embodiment of the invention;
- Figure 3: is a schematic illustration of a power supply network according to a further exemplary embodiment of the invention;
- Figure 4: is a schematic bloc diagram illustrating an exemplary embodiment of the inventive method.

In the accompanying figures, examples of interactions between different components of each illustrated exemplary embodiment are materialized by one or two-directional arrows.
The skilled person will understand that these interactions are only exemplary and can be modified depending on the chosen variant of an embodiment of the invention.

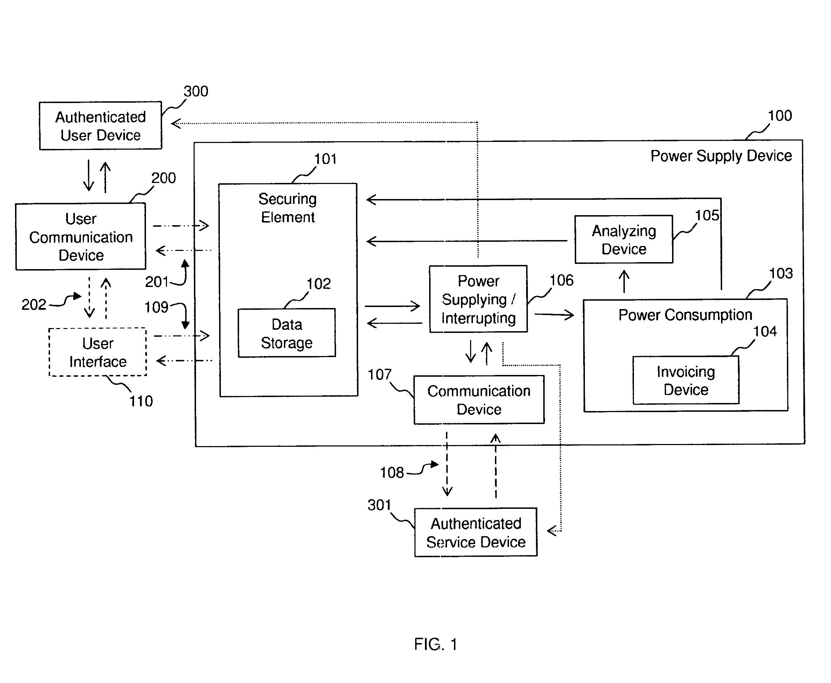

Figure 1 illustrates a first example of an embodiment of a power supply device 100 according to the invention with an example of its interaction with a user's communication device 200 and various types of authenticated devices 300, 301, in a schematic diagram. Such a power supply device 100 can be used for short range wireless communication, in particular by Radio-Frequency Identification (RFID), with an external user communication device 200, in particular a user RFID device, such as a prepaid card or any other device equipped with Near Field Communication (NFC) technology such as for instance a smart phone or the like, to provide an on-demand service to the user after having successfully authenticated the user. Thus, the communication between the power supply device 100 and the user's communication device 200 can be at least a wireless communication and can even also be contactless. In further embodiments, the power supply device 100 and in particular the authentication could be carried out using other types of wireless and contactless communication, for example with a user's Wi-Fi and/or Bluetooth device, but also with wireless and contact based communication devices such as magnetic cards or smart cards or other devices comprising an integrated circuit card (ICC). The inventive power supply device 100 could be even configured for wireless communication with a user's device using more than one of the above wireless communication technologies, for instance such as a smart phone comprising all of the above technologies. The wireless technology to be used for the communication and mutual secure authentication between the power supply device 100 and the user's communication device 200 could be either fixed on the power supply device 100 side or could depend on a preferred configuration on the side of the user's communication device 200.

An on-demand service provided by the power supply device 100 can be the access to electric power. As illustrated in Figure 1, the user may also want to plug a device 300 of his/her choice to the power supply device 100 in order to charge and/or use it.

In different embodiments of the inventive power supply device 100, the user's communication device 200 might be comprised in the user authenticated device 300 to be plugged to the power supply device 100. This could be for instance the case when allowing the user to charge or recharge the user communication device 200 itself, for instance when the user is using a cell phone, smart phone or the like, a laptop, a camera or any other equipment comprising an NFC card or tag that can directly be authenticated by the inventive power supply device 100.

As further illustrated in Figure 1, a further access to power supply may be required to activate an authenticated on-demand service device 301 such as an electric device equipped with the inventive power supply device 100 or linked to the inventive power supply device 100 and provided as an on-demand service. The inventive power supply device 100 could then comprise or have access to, for instance via a link to a computer server, a list of one or more authenticated devices 301 which could be supplied with power and used by the user after a successful mutual secure authentication between the power supply device 100 and the user's communication device 200.

An example could be found in a public place where an on-demand service would be provided to a wide user community, such as a laundry for using washing machines or dryers 301 equipped with, in particular plugged to, an inventive power supply device 100. Thus, in such an embodiment, the inventive power supply device 100 could be an electric power plug 100 or any other electric terminal 100 for supplying power to the washing machines and/or dryers 301. In variants of an embodiment, the inventive power supply device 100 could be a male power plug 100 such as an integrated socket like the ones found in washing machines 301 or any other electric appliances. In the example of the laundry, the user would be able to start the washing machine or the dryer 301 only after a successful mutual secure authentication between the inventive power plug 100 and a user's prepaid card or cell phone 200 comprising a wireless technology such as RFID, NFC, Wi-Fi or Bluetooth or a contact based card such as a magnetic card or a smart card or the like for communicating with the power plug 100.

In further variants of an embodiment, the inventive power supply device 100 could be a female power plug 100 such as a mounting socket 100 of a wall socket, for example a socket 100 of an electric power terminal such as the ones for recharging batteries of electric cars 300, or a wall plug 100 for plugging electric devices 300 such as cell phone or laptop chargers 300 in public areas like airports, train stations or the like.

According to the invention, the power supply device 100 illustrated in Figure 1 comprises a securing element 101 which can be configured for a mutual secure authentication with an external communication device, here the user communication device 200. The securing element 101 can be used to store and administrate the encryption keys required for a successful mutual secure authentication with the user communication device 200. In variants of the invention, the securing element 101 could be a Security Access Module (SAM) and/or a Subscriber Identity Module (SIM) and/or a Universal Integrated Circuit Card (UICC). A particular encryption system among the above, SAM, SIM or UICC, could be preferred if the power supply device 100 is to be accessed only by a restricted kind of users.

A combination of several or all of the above encryption systems could be preferred if the power supply device 100 is rather intended for a wide user community in order to improve its security and compatibility with possible encryption systems used in different kinds of user communication devices 200. The securing element 101 allows a secured encrypted communication to and from the user's communication device 200, such that third parties cannot access the user data on the user's communication device 200 without breaking the encryption. Thus, the inventive power supply device 100 provides a secure exchange of information to the user and protects the user from identity theft by third parties.

The power supply device 100 can also comprise a data storage device 102, which can optionally, but not necessarily, be a part of the securing element 101, as illustrated in Figure 1. This variant of an embodiment of the inventive power supply device 100 is advantageous for example when the power supply device 100 requires storing user data belonging to different users in order to provide a personalized on-demand service, which can be necessary when it is used by a predetermined amount of users. In preferred embodiments, the data storage device 102 can be a non-volatile memory, and in further preferred embodiments, it can even be configured for encrypting the data, in particular the user data, stored therein, with the advantage of preventing even further data or even identity theft by third parties.

Since the securing element 101 and the data storage device 102 can both be encrypted, the inventive power supply device 100 has the advantage that a replacement of the power supply device 100 by a fraudulent device can be prevented or at least reduced in comparison to the prior art, as the wireless communication and mutual secure authentication with the user's communication device 200 will not be possible without the original securing element 101.

Figure 1 further illustrates an optional power consumption measuring device 103 for measuring the power consumed by an authenticated device 300, 301 using power supplied by the power supply device 100. A further optional device 104 for generating invoices and invoicing the user, for instance via the secured communication between the secure element 101 and the user's communication device 200, based on the measurements of the power consumption measuring device 103 is also illustrated therein. The invoice generating device 104 can be part of the power consumption measuring device 103, as illustrated in Figure 1, but in further embodiments, it could be a separate component of the power supply device 100. According to a preferred variant of this optional feature of the invention, the device 104 can generate invoices without any restriction about the amount of power supplied after a successful mutual secure authentication between the user's communication device 200 and the securing element 101, within the power supplying capacity of the power supply device 100. Alternatively, in other variants of an embodiment, the invoice generating device 104 could be configured for interrupting the power supply from the power supply device 100 if the measurement of the power consumption measuring device 103 reaches a predetermined power consumption threshold, which can be set either by the provider of the power supply device 100 and/or authenticated device 301 or by the user, for instance according to parameters set in the user's communication device 200 or user authenticated device 300.

Figure 1 illustrates that the inventive power supply device 100 can further comprise a power consumption analyzing device 105, which can use data from the power consumption measuring device 103 in order to analyze the evolution of the power consumption of an authenticated device 300, in particular from an user authenticated device 301 linked to the user's communication device 200, consuming power from the power supply device 100 after a mutual secure authentication. Therefore, a power consumption analyzing device 105 can be advantageous in order to deduce a usage mode of an authenticated device 300, 301, and it could be used for diagnostics or monitoring purposes related to the use of the authenticated device 300, 301. The power consumption analyzing device 105 could also be used to adapt a configuration of the power supply device 100 after a successful mutual secure authentication with the user's communication device 200 based on how the authenticated device 300, 301 is used with the power supply device 100.

In the embodiment schematically illustrated in Figure 1, the power supply device 100 further comprises a device 106 for allowing or interrupting the power supply, which can be for instance a relay. Thus, when the user's communication device 200 is in range for communicating with the power supply device 100, in particular the securing element 101, the relay 106 can establish or interrupt the power supply based on the result of the communication. If the mutual secure authentication between the power supply device 100 and the user's communication device 200 is successful, the relay 106 can allow power to be supplied to the corresponding authenticated device 300, 301. If, however, the mutual secure authentication is not successful, the relay 106 will remain in the interruption position and not allow any power to be supplied. If the authenticated device 301 has been used in a predetermined way, for instance when using a service such as a washing machine, once the cycle of usage is finished the relay 106 can interrupt the power supply, for example based on a result of the power consumption analyzing device 105. If the power supply device 100 is used for recharging or using a user authenticated device 300 plugged to the power supply device 100, the relay 106 can interrupt the power supply when the user's device 300 is unplugged from the power supply device 100 or also based on a result of the power consumption analyzing device 105.

As a further optional feature, the power supply device 100 can comprise a communication device 107 for communicating with an authenticated device 301 equipped or linked to the power supply device 100 like in the schematic illustration of Figure 1. Thus, by means of the communication device 107, the power supply device 100 could send commands to the authenticated device 301 or receive information from the latter. In a variant of an embodiment of the invention, when an authenticated device 300 is equipped with a power supply device 100 or plugged to the latter, or when a user authenticated device 301 is plugged to the power supply device 100, the communication between said authenticated device 300, 301 and the communication device 107 can advantageously be carried out using PLC technology. Other technologies may, however, also be used.

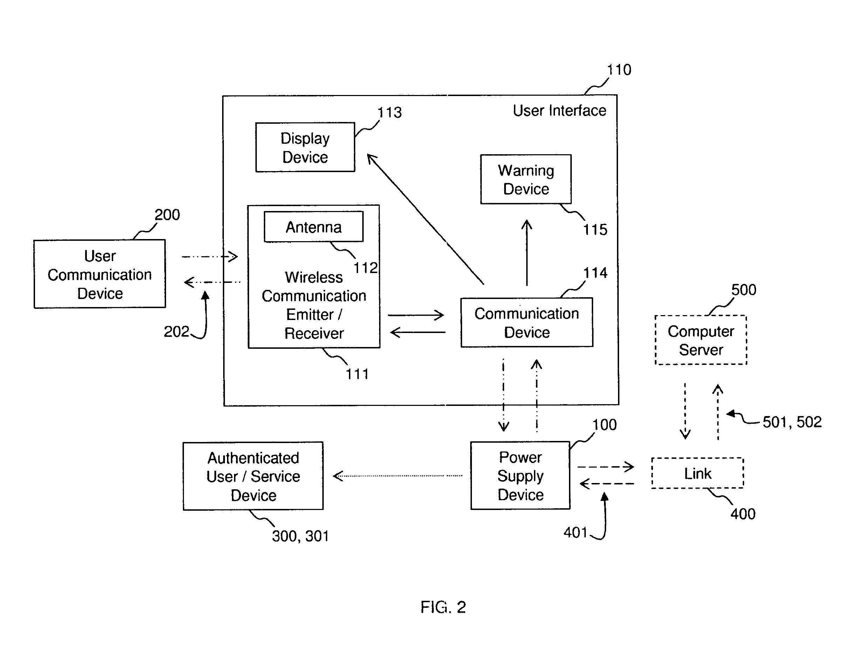

Figure 1 further illustrates that the power supply device 100 can be associated to a user interface device 110. Like in the embodiment illustrated in Figure 1, the user interface device 110 could be remote and linked to the power supply device 100 using for instance an encrypted wired or wireless connection, for instance if the power supply device 100 has to be installed in a place difficult to access by the user or the user's communication device 200. This could be the case when the power supply device 100 is a wall plug or a plug arranged close to the ground or at any other inconvenient location for a user. In other embodiments, the user interface device 110 could be integral with the power supply device 100 or arranged next to it. In advantageous embodiments, the user interface device 110 could also be comprised in an authenticated device 301 providing the on-demand service. A schematic illustration of an embodiment of a user interface device 110 is provided in Figure 2 and will be detailed hereafter.

The wireless communication between the power supply device 100, in particular the securing element 101, and the user's communication device 200 usually requires an antenna and/or a receiver/emitter on the side of the power supply device 100. Such features could be comprised in the securing element 101 or more in general in the power supply device 100 when it is accessible to the user and in range for a wireless communication with the user's communication device 200. However, should the power supply device 100 be installed out of range for the wireless communication with the user's communication device 200 or in an unpractical location for the user, devices such as an antenna and/or an emitter/receiver for the wireless communication could be comprised in a remote user interface device 110 connected to the power supply device 100. Since the wired or wireless communication between the user interface device 110 and the securing element 101 can be encrypted, a fraudulent replacement of the user interface device 110 by malevolent third parties can advantageously be prevented, as the encrypted data exchanged between the user's communication device 200 and the power supply device 100 would not be accessible or readable.

Figure 2 illustrates a schematic view of an embodiment of a user interface device 110 and an example of its interaction with a user's communication device 200 and a power supply device 100, according to an embodiment of the invention. Like in the exemplary embodiment of a power supply device 100 illustrated in Figure 1, the user interface device 110 illustrated in Figure 2 can be remote or integrated in the power supply device 100.

In the exemplary embodiment illustrated in Figure 2, the user interface device 110 comprises a wireless communication emitter/receiver device 111 for emitting and receiving communications to and from a user's communication device 200. In the example illustrated in Figure 2, the wireless communication emitter/receiver device 111 is comprised in the user interface device 110, and the user interface device 110 is illustrated as a remote device communicating with the power supply device 100, but in alternative embodiments of the present invention, both or at least one of the user interface device 110 or the wireless communication emitter/receiver device 111 could be built in the power supply device 100 instead of being remote.

In a preferred variant of this embodiment, the wireless communication emitter/receiver device 111 can be a NFC emitter/receiver. In further variants, it could be for instance a Wi-Fi and/or a Bluetooth emitter/receiver device. In Figure 2, an antenna 112 is also illustrated, which is associated to the wireless communication emitter/receiver device 111.

In advantageous variants of an embodiment of the inventive power supply device 100, the user interface device 110 can further comprise a display device 113 such as a Liquid Crystal Display (LCD) and/or a Light-Emitting Diode (LED) bar or the like for displaying information, in particular usage information, to the user about the power supply device 100. For example, the display device 113 could be used for displaying the amount of power still available for a current authenticated user of the power supply device 100.

In variants of an embodiment in which the user interface device 110 is remote, as further illustrated in Figure 2, the user interface device 110 can further comprise a communication device 114 for communicating with the power supply device 100, said communication being wired or wireless and preferably encrypted in order to allow sufficient security for the data being exchanged between the user's communication device 200 and the power supply device 100, in particular its securing element 101, and transiting through the user interface device 110.

The variant of an embodiment illustrated in Figure 2 shows that the user interface device 110 can further comprise a warning device 115, which can be a visual or an audible warning device for warning the current authenticated user of the power supply device 100. In variants of this embodiment, the warning device 115 can be associated to the display device 113 in order to provide information about the power supply device 100 to a current authenticated user. This could be for instance related to a malfunction of the power supply device 100, a limit of the power supply, a signal indicating whether the mutual secure authentication is successful or not, and any other similar warnings and/or visual and/or audible information messages.

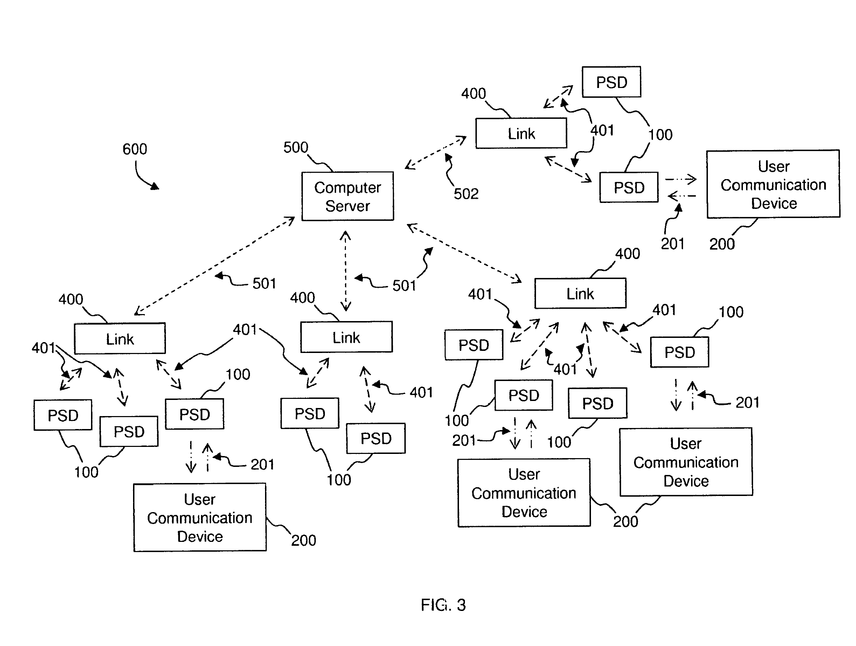

An on-demand service provider may want to install a power supply device 100 as a single device at one given location. However, most on-demand service providers usually want to provide their on-demand services at various locations. Similarly, the on-demand service provider may wan to configure a power supply device 100 locally, but most on-demand service providers will find it advantageous to configure a power supply device 100 remotely. A remote configuration is even more advantageous when the on-demand service provider needs to administrate a plurality of power supply devices 100 installed at various locations. For such cases, as further illustrated in Figures 2 and in the exemplary embodiment of a power supply network 600 illustrated in Figure 3, an inventive power supply device 100 can be connected to at least one link device 400, which can in turn be connected to a computer server 500. Alternatively, for instance when the inventive power supply device 100 is used alone, it could be directly connected to the computer server 500. In variants of an embodiment of the present invention, the optional remote computer server 500 could be configured for remote administration of one or even of a plurality of power supply device 100, in particular for configuring a list of authorized users and/or authenticated devices 300, 301, and/or for forcing a state of each power supply device 100, such as allowing or interrupting the power supply depending on the result of the mutual secure authentication, and/or for monitoring the use of any of the power supply devices 100, in particular of all power supply devices 100 connected to the computer server 500 by means of a link device 400, and/or for monitoring and/or analyzing the evolution of the power consumption of authenticated devices 300, 301 currently using a power supply device 100, which could be carried out for instance in combination with the power consumption analyzing device 105 of the embodiment illustrated in Figure 1.

The example of the laundry could also be used to illustrate such a power supply network 600, for instance when the service provider is the owner or administrator of several laundry places. The usage of each washing machine or dryer 301 could be monitored from a central server 500, which could be at the office of the laundry owner.

A further example could be a set of terminals 100 for recharging electric vehicle batteries 301 of rental electric vehicles in a city. A central administrator would be able to follow the evolution of the power consumption of each electric car 301 on a central server 500 and send messages to the users via the terminals 100 at different locations around the city. Each terminal 100 could comprise a user interface device 110 with a screen 113 and/or a warning device 115.

Alternatively or in complement thereto, in environments with a very limited number of inventive power supply device 100, which therefore do not necessarily require the use of an external server 500, an inventive power supply device 100 could also be configured by exchanging data securely to/from the user's communication device 200. An example for this could be a small office environment, where an inventive smart plug 100 may be installed in a guest room and configured on-demand over an encrypted NFC connection 201 with a smart phone 200 or the like in order to grant a visitor access to power supply, for instance for plugging a laptop 300 or the like.

In order to prevent problems due to changes in the electric lines, as illustrated in Figure 2 and further in Figure 3, it is preferred that a link device 400 is connected to one or more inventive power supply devices 100 that are arranged on the same electric line. The connection 401 between a link 400 and the respective power supply devices 100 on the same electric line can therefore advantageously make use of PLC technology. Furthermore, also illustrated in the embodiment schematically shown in Figure 3, in order to avoid problems if the computer server 500 needs to be connected to a different electric line and therefore in order to avoid interruptions in the connection between the computer server 500 and any of the link devices 400 connected thereto, the connection 501, 502 between a given link device 400 and the computer server 500 can in turn be advantageously a wired or wireless network connection, such as a Local Area Network (LAN) connection 501 or a Wireless Local Area Network (WLAN) connection 502.

In the example of the network of laundries, at a given laundry, all washing machines and dryers 301 to be used on-demand and equipped with the inventive power plugs 100 could advantageously be connected to a single corresponding electric line. Therefore, all machines 301 of a given laundry could have a PLC connection 401 to a corresponding single PLC link device 400. In turn, all PCL link devices 400 corresponding to the various laundry places around the city could be connected by wired or wireless connection 402 to the central administrator server 500.

In the example of the network of terminals 100 for recharging batteries 301 of electric vehicles, one recharging station could comprise many terminals 100 arranged on the same electric line. All terminals 100 of a given station could then be connected to a PLC link device 400. In turn, the PLC link devices 400 of each station could be connected to a central remote computer server 500.

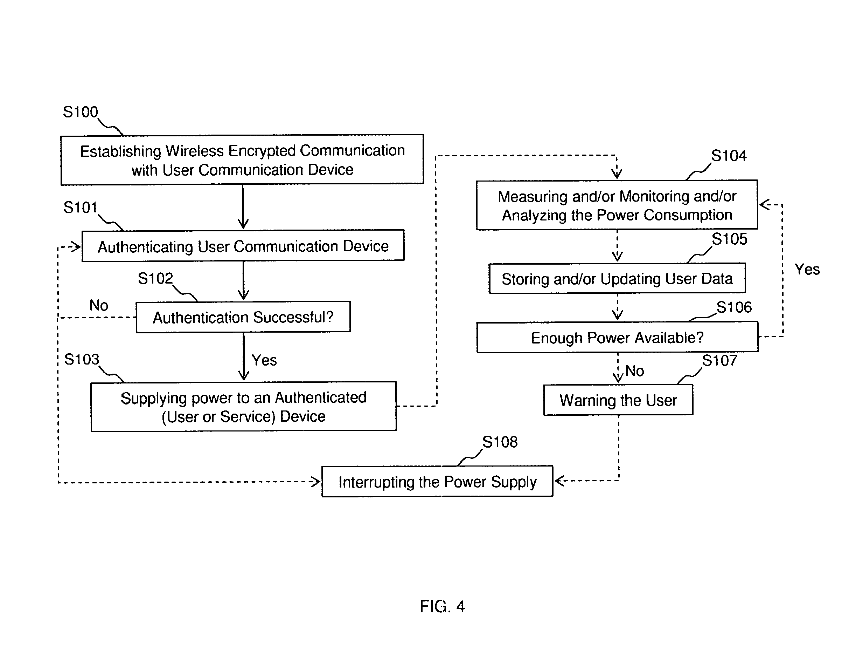

Figure 4 illustrates schematically an example of an embodiment of the inventive method for granting a user access to using the power supplied by a power supply device 100. The main steps S100 to S103 illustrate the mutual authentication between a user's communication device 200 and a power supply device 100 and the consequent access to using the power supplied by the power supply device 100, according to the invention. Steps S104 to S108 illustrate optional steps that may or may not be carried out depending on variants of the inventive method.

In step S100, when a user's communication device 200 is in range for establishing a wireless communication with the power supply device 100, the communication is established, which comprises encrypting the communication by means of the securing element 101.

In step S101, once the communication is established between a user's communication device 200 and the power supply device 100, user data can be exchanged wirelessly and securely in order to start a mutual authentication between the user's communication device 200 and the power supply device 100, in particular the securing element 101. Step S102 illustrates a test of whether the mutual secure authentication is successful.

Based on a positive result of the mutual secure authentication, in step S103, the user can be granted access to the power supply device 100 for use, for instance, either with a user's device 300 or for using an on-demand service device 301 powered by the power supply device 100.

If, however, the result of step S102 is negative, the user is not granted access to the power supplied by the power supply device 100. In variants of the inventive method, the mutual secure authentication steps S101 and S102 could be reinitialized. In further variants, if the step S103 of supplying power required an on-going wireless communication with the user's communication device 200, an interruption of said communication would lead to a negative authentication and therefore to the step S108 of interrupting the power supply to the authenticated device 300, 301.

Further additional steps are also illustrated in Figure 4, for instance step S104 of measuring, in particular measuring and monitoring, the power consumed by the authenticated device 300, 301 during the step S103 of supplying power. This step could also optionally comprise analyzing the evolution of the power consumption.

A further optional step S105 of storing and/or updating data, in particular encrypted user data, exchanged with the user's communication device 200 on the power supply device 100 is also possible. This could be achieved for instance using a storing means 102 such as a non-volatile memory, which could be a part of the securing element 101 in a variant of a preferred embodiment.

When carrying out a step S104 of monitoring the power consumption, a further step S106 of testing whether the inventive power supply device 100 still has enough power for its current usage could also be carried out.

Based on the result of step S106, the user could be warned in a step S107, prior to interrupting the power supply for lack of remaining power in the power supply device 100.

Further non-illustrated method steps could include generating an invoice for the user based on step S104 of measuring the power consumption, as well as invoicing the user in step S105 while updating the user data.

Further exemplary embodiments of the invention will be discussed hereafter, in which the same reference signs as in the exemplary embodiments illustrated in Figures 1 to 3 and the method steps of Figure 4 will be used for clarity.

An embodiment of a power supply network 600 will be discussed hereafter, in a situation where an on-demand service provider wants to provide an on-demand service to a restricted, in particular predetermined, number of authorized users. This can be the case for instance in an environment such as an office space, wherein each user can access smart electric power plugs 100 according to the invention. Each user could then have a contact based or a contactless card 200 which could comprise a unique encrypted identifier. The contact based or contactless card 200 could be a physical card or a dematerialized card, and could be for instance comprised in a user's equipment 300 such as a user's smart phone, Personal Digital Assistant (PDA), computer or the like, or be a magnetic card or a smart card or the like.

In this environment, an administrator could configure a list of authorized identifiers corresponding to each user for each power plug 100 of the power supply network 600 by means of a remote computer server 500. The computer server 500 could perform an authentication of each power plug 100 of the power supply network 600, in particular using data encrypted in the corresponding securing element 101 of each power plug 100. The list of authenticated users associated to each power plug 100 could then be encrypted by the server and sent to each power plug 100 for storing on a respective data storage device 102.

When a user's card 200 is in range for communicating with a power plug 100 of the power supply network 600, for instance for communication via NFC with an user interface device 110 associated to the power plug 100, in other words carrying out step S100, the power plug 100 could initiate a mutual authentication between its securing element 101 and the user's card 200, in particular the power plug 100 could initiate the identification of the user's card 200 secure identifier, thereby carrying out steps S101 and S102. The securing element 101 could then compare the encrypted identifier stored in the user's card 200 and received via NFC by the power plug 100 to the list of encrypted identifiers stored in the data storage device 102, like in step S102. Since all data are encrypted, a secure exchange of data is thereby carried out between the user's card 200 and the power plug 100. Depending on the successful authentication of the user's identifier, the power plug 100 could then be activated for use by the user, according to said user's permissions related to the authenticated identifier, and power could be supplied like in step S103.

A further embodiment of a power supply network 600 will be discussed hereafter, corresponding to a situation in which an on-demand service provider chooses to provide the on-demand service to a much wider user community than in the previous example. In this embodiment, power plugs 100 are installed at various locations of an airport, train station, coffee shop or other similar public area.

In this embodiment, a user could buy a prepaid contactless card 200, which could be either a physical card or a dematerialized card, for instance comprised in a user's electric equipment, smart phone, PDA, computer or the like, and activated by the user's purchase. A prepaid card 200 could be purchased for a predetermined amount of power to be consumed from any of the power plugs 100 of the on-demand service provider's power supply network 600. The initial amount of energy corresponding to the purchase could be encrypted and stored in the prepaid card 200.

When a user's purchased card 200 is in range for a wireless communication, in particular wireless authentication, with a power plug 100, in particular a user interface device 110 associated to said power plug 100, thereby starting step S100, the power plug 100 initiates the mutual secure authentication, corresponding to steps S101 and S102, and verifies the data related to the amount of energy available to the holder of the card 200, which is the encrypted data stored on the card 200. This could correspond to a step equivalent to step S106. In this embodiment, the user interface device 110 could comprise a display device 113 for displaying said information about the data related to the amount of energy available for consume, for instance the "power credit" still available, stored on the prepaid card 200. In other words, a step S106 could be inserted after the mutual authentication step S102, so that the power supplying step S103 would be carried out based on a successful mutual authentication only if enough credit is available on the card 200.

The power plug 100 could then be activated if the amount of energy is sufficient. Power could then be supplied from the power plug 100 to the user, either in predetermined amounts, or as long as the securely identified prepaid card 200 contains enough credit. In this embodiment, the power plugs 100 could comprise respective power consumption measuring devices 103 for measuring the real power consumption of a current authenticated user and for instance update the amount of credit available on the card 200 in real time, thereby carrying out steps S104, S105 and S106 in a loop, while updating and displaying said amount still available on the display device 113. After use, the last updated information on the credit still available on the card 200 could be again stored in an encrypted manner on the card 200. At the next use, the user could again present the prepaid card 200 comprising the updated amount of energy available to a power plug 100 of the power supply network 600.

In further embodiments, the display device 113 of the power supply device 100 or user interface device 110 could be replaced by an LCD screen or a LED bar on the user's card, or pre-cut elements arranged on the user's cards 200 and which could be removed one after the other after each connection to a power supply device 100, or even a combination thereof.

If the value of the amount of energy available for consume nears zero on the card 200, an audible alarm could be emitted by a warning device 115 of the power supply device 100, in particular comprised in the user interface device 110. This could correspond to step S107 of the embodiment illustrated in Figure 4. The user could then continue using the power plug 100 for consuming energy only if the credit available is above a minimal predetermined fraction or "packet" of energy. If the amount of credit is too low or equals zero, a step S108 of interrupting the power supply could be carried out after the step S107 of warning the user.

In this embodiment, the analysis of the power used by the user could be carried out in real time, for instance using measurements in watts / hour or the like carried out by a power consumption measuring device 103 of the power plug 100. Unlike most systems known in the art, such as terminals for recharging electric vehicles known in the art, the inventive systems do not enforce a restriction in the power supplied/used, thereby allowing multimode offers to be deployed, wherein power can be supplied with a single type of equipment, for instance a single preferred embodiment of a power supply device 100, to a plurality of user's devices 300 different from each other. Thus, the invention allows access to an on-demand service such as power supply to a wide user community.

In all the above embodiments and in further embodiments of the invention, the power supply device 100 could be for example a female power plug, such as a mounting socket or a wall socket. In variants of such embodiments, the power supply device 100 could be used by a user for example in a public area, a train station or an airport, for recharging an authenticated user device 300 like a cell phone, a laptop battery or the like. Alternatively, in further embodiments, the power supply device 100 could be a male power plug, such as an integrated socket, and could be connected to an authorized device 301, which could then only be used by a user after a successful identification.

The skilled person will understand that the above embodiments of the inventive devices and methods are only exemplary, and that the invention finds numerous other applications. For instance, the invention could be used to provide access to other power sources, such as water, or for instance for using electric equipments connected to the electric network, such as washing machines, dryers, sport apparatuses in sport clubs, free service machines available in car washing stations, terminals for recharging electric vehicles, etc.

### List of Reference Signs

| | |
|---|---|
| 100 | Power supply device |
| 101 | Securing element |
| 102 | Data storage device |
| 103 | Power consumption measuring device |
| 104 | Invoicing device |
| 105 | Power consumption analyzing device |
| 106 | Power supplying / interrupting device (relay) |
| 107 | Communication device |
| 108 | PLC connection |
| 109 | Wired or wireless encrypted communication |
| 110 | User interface |
| 111 | Wireless communication emitter / receiver device |
| 112 | Antenna |
| 113 | Display device (e.g. LCD, LED bar) |
| 114 | Communication device |
| 115 | Warning device |
| | |
| 200 | User communication device |
| 201 | encrypted wireless communication |
| 202 | wireless communication |
| | |
| 300 | Authenticated user device (e.g. cell-phone, laptop) |
| 301 | Authenticated device (e.g. washing machine) |
| | |
| 400 | Link device |
| 401 | PLC connection |
| | |
| 500 | Computer server |
| 501 | Wired network connection |
| 502 | Wireless network connection |
| | |
| 600 | Power supply network |

## Claims

1. Power supply device (100) for wireless communication with a communication device (200), in particular a wireless contact based or contactless communication device, of a user and for supplying power to an authenticated device (300, 301) based on a result of the wireless communication,
wherein the authenticated device (300, 301) is a user's device (300) or an on-demand service device authenticated (301) by the power supply device (100),
**characterized in that**
the power supply device (100) comprises a securing element (101) configured for mutual secure authentication with an external communication device, and **in that** the user is granted permission to use the authenticated device (300, 301) with the power supplied by the power supply device (100) based on a successful mutual secure authentication between the securing element (101) and the user's communication device (200).

2. Power supply device according to claim 1, for communication with a Radio-Frequency Identification (RFID) device, in particular a Near Field Communication (NFC) device, and/or a Wi-Fi device and/or a Bluetooth device and/or a magnetic device and/or a device with an integrated circuit card (ICC).

3. Power supply device according to any of claims 1 or 2, wherein the user is granted permission to plug a user's authenticated device (300) to the power supply device (100) based on the successful mutual secure authentication.

4. Power supply device according to any of the precedent claims, further comprising user data storage means (102) configured for storing user data read from the user's communication device (200), in particular for storing user data comprising authentication data, more in particular authentication data for using said authenticated device (300, 301).

5. Power supply device according to claim 4, wherein the user data storage means (102) is configured for encrypting the user data.

6. Power supply device according to any of the precedent claims, further comprising power consumption measurement means (103) configured for measuring the power consumption of an authenticated device (300, 301) when said authenticated device (300, 301) is used with the power supply device (100) after a successful mutual secure authentication.

7. Power supply device according to any of the precedent claims, further comprising power consumption evolution analyzing means (105) configured for analyzing the evolution of the power consumption of the authenticated device (300, 301).

8. Power supply device according to claim 7, wherein the power consumption evolution analyzing means (105) is further configured for deducing a usage mode of the authenticated (300, 301) device based on the analysis of the power consumption evolution.

9. Power supply device according to any of the precedent claims, further comprising means for establishing or interrupting the power supply (106), in particular a relay.

10. Power supply device according to any of the precedent claims, further comprising a communication device (107) for sending/receiving data to/from the authenticated device (300, 301), in particular by means of Power Line Communication (PLC).

11. Power supply device according to any of the precedent claims, further comprising a user interface device (110) comprising a wireless communication emitter/receiver (111), in particular a Near Field Communication (NFC) emitter/receiver.

12. Power supply device according to claim 11, wherein the user interface device (110) is remote and further comprises a communication device (114) configured for wired or wireless encrypted communication with the power supply device (100).

13. Power supply device according to any of claims 11 or 12, wherein the user interface device (110) further comprises a display device (113) configured for displaying at least the power still available in the power supply device (100) for the authenticated device (300, 301) currently in use.

14. Power supply device according to any of claims 11 to 13, wherein the user interface device (110) further comprises a warning device (115), in particular an audible warning device.

15. Power supply device according to any of claims 1 to 14, wherein the power supply device (100) is a female power plug, in particular a mounting socket or a wall socket.

16. Power supply device according to any of claims 1 to 14, wherein the power supply device (100) is a male power plug, in particular an integrated socket.

17. Power supply network (600) comprising a plurality of power supply devices (100) according to any of the precedent claims, a link device (400), and a computer server (500),
wherein the link device (400) is arranged on the same electric line as at least one, and up to all, of the plurality of power supply devices (100), and in particular is connected thereto by Power Line Communication (PLC), and
the link device (400) is further connected by wired or wireless network to the computer server (500); and
wherein the computer server (500) is configured for
configuring a list of users authorized to use any of the plurality of power supply devices (100) and/or
forcing a state of any of the plurality of power supply devices (100) and/or monitoring the use of any of the plurality of power supply devices (100) and/or monitoring, in particular monitoring and analyzing, the evolution of the power consumption of at least one authenticated device (300, 301) connected to any of the plurality of power supply devices (100), in particular, in combination with any of claims 7 or 8, receiving and analyzing data received from respective power consumption evolution analyzing means (103).

18. Power supply network (600) according to claim 17, comprising a plurality of link devices (400), wherein each link device (400) is connected to a plurality of power supply devices (100).

19. Method for granting a user access to power supply from a power supply device, comprising the steps of:
communicating wirelessly with a user's communication device; and
supplying power based on a result of the wireless communication,
**characterized in that**
the step of communicating wirelessly comprises encrypting the wireless communication and
performing a mutual secure authentication with the user's communication device;
and
the step of supplying power is carried out if the step of performing the mutual secure authentication is successful.

20. Method according to claim 19, further comprising at least one of the following steps:
storing user data, in particular encrypted user data, on the power supply device;
measuring, in particular measuring and monitoring, the power consumption during the step of supplying power and/or analyzing the evolution of the power consumption during the step of supplying power;
interrupting the step of supplying power if the wireless communication is interrupted and/or warning the user prior to interrupting the power supply; and
configuring, in particular remotely configuring, a list of users authorized to use the power supply device.
